# EUROPEAN PATENT SPECIFICATION

(11) **EP 4 642 380 B1**
(45) Date of publication and mention of the grant of the patent: **26.08.2026**
(21) Application number: 23833840.4
(22) Date of filing: 22.12.2023
(51) Int. Cl.: A61C 5/77, A61C 13/00

(54) **AUTOMATED SELECTION OF DENTAL RESTORATION MATERIALS**
AUTOMATISIERTE AUSWAHL VON DENTALRESTAURATIONSMATERIALIEN
SÉLECTION AUTOMATISÉE DE MATÉRIAUX DE RESTAURATION DENTAIRE

(30) Priority: 27.12.2022 DE 102022134859
(43) Date of publication of application: 05.11.2025
(73) Proprietor: Exocad GmbH, 64295 Darmstadt (DE)
(72) Inventor: STEINBRECHER, Tillmann, 64342 Seeheim-Jugenheim (DE)
(74) Representative: Richardt Patentanwälte PartG mbB
(86) International application number: PCT/EP2023/087636
(87) International publication number: WO 2024/141478

(56) References cited:
- US-A1- 2003 222 366
- US-B2- 10 548 694

## Description

The invention relates to the field of dental technology. More particularly, the invention relates to a computer-implemented method for selecting dental restoration materials for manufacturing a dental restoration. The invention furthermore relates to a computer system as well as a computer program product for selecting dental restoration materials for manufacturing a dental restoration.

For manufacturing a dental restoration of a damaged tooth of a patient, a selecting of an appropriate dental restoration material is necessary. Finding the suitable dental restoration material may be complex and laborious. In case a dental restoration material is chosen, which later on turns out to be unsuitable, the resulting dental restoration may be unsuitable, only short living and/or an alternative dental restoration may have to be found.

US 10 548 694 B2 describes a system and method for optimizing a preparation of dental restorations. The system comprises a dental restoration surface processing unit, a dental restoration assessment unit, a database comprising a treatment parameters database and a processing protocols database, a processor operationally coupled to said dental restoration surface processing unit and a protocol selector. The method treats a dental restoration surface using the system and according to one or more selected processing protocol.

US 2003/222366 A1 describes a dental restoration production in which a digitized optical impression of a dental restoration site is captured using an intra-oral camera, and the captured optical impression is converted into a data file usable for computer-assisted production of all-ceramic or composite resin dental restorations using a fabrication system based on stereolithography.

It is an objective to provide for a computer-implemented method, a computer system and a computer program product for selecting dental restoration materials for manufacturing a dental restoration.

In one aspect, the invention relates to a computer-implemented method for selecting dental restoration materials for manufacturing a dental restoration. The method comprises receiving a 3D digital dentition model of at least one part of a dentition of a patient requiring a restoration of a damaged tooth. Furthermore, a 3D digital restoration model of the dental restoration for the damaged tooth is generated. The 3D digital restoration model defines for the dental restoration an optical target dental property for the damaged tooth. A degree of dental attrition of the dentition of the patient using the 3D digital dentition model is determined. A target minimum degree of hardness of the dental restoration using the determined degree of attrition is determined. Furthermore, the method comprises selecting for the dental restoration as defined by the 3D digital restoration model a dental restoration material from a database of dental restoration materials comprising a plurality of dental restoration materials. Each of the dental restoration materials is assigned with at least one optical and material parameter. The optical parameter of the selected dental restoration material matches the optical target dental property of the damaged tooth and the material parameter indicates a degree of hardness larger than or equal the target minimum degree of hardness. This may be advantageous because the computer-implemented method helps to manufacture a dental restoration in an accurate and efficient manner, such that the dental restoration mimics the original damaged tooth in its undamaged state.

For example, the computer-implemented method may provide an automatic selection of dental restoration materials for manufacturing a dental restoration, e.g., in the case of restoration of a damaged tooth of a patient for a dental treatment.

As mentioned above, a 3D digital dentition model of at least one part of a dentition of a patient requiring a restoration of a damaged tooth is received. The 3D digital dentition model may be obtained from a scan data of at least a part of the dentition of the patient requiring a restoration of a damaged tooth. The scan data may be acquired by using a scanner, e.g., an optical scanner. The scan may be a direct scan of the patient's dentition, e.g., an intraoral scan. Alternatively or additionally, an indirect scan of the patient's dentition may be used to acquire the scan data. For example, a dental impression of the patient's dentition or a dental model of the dentition, like a plaster model, may be scanned.

This 3D digital dentition model may be generated using the scan data of a direct and/or indirect scan of the at least one part of a dentition of a patient requiring a restoration of a damaged tooth. The 3D digital dentition model resembles an actual state of the patient's dentition comprising the damaged tooth, i.e., it may be a digital replica of the physical dentition comprising the damaged tooth. The 3D digital dentition model may, in particular, resemble the geometrical form of the physical dentition comprising the damaged tooth. The 3D digital dentition model may be generated by a computer system or it may be received from an external source. The external source may, e.g., be a server, like a cloud server, providing the 3D digital dentition model via a network. The external source may, e.g., be a removable storage device providing the 3D digital dentition model via a direct communication connection.

The 3D digital dentition model may, e.g., be generated using scan data acquired by an intraoral scan of at least one part of the dentition of the patient comprising a damaged tooth. The intraoral scan may for example be an optical scan. Alternatively, the scan data may be acquired by scanning an impression of the dentition of the patient. The impression may for example be scanned using an optical sensor. In addition, scan data may, e.g., be used, which is acquired in the near-infrared range using near-infrared imaging (NIRI). NIRI uses electromagnetic radiation e near-infrared region of the electromagnetic spectrum to scan an internal structure, i.e., enamel and dentine, of patients' teeth. Tooth enamel is transparent to near-infrared wavelengths, while tooth dentin and other interference, e.g., caries, may show up as visual contrast. Thus, by scanning the internal structure using NIRI, the original tooth can be mimicked in an efficient manner.

Natural teeth have a multilayer structure. The outer layer of a tooth, the enamel, is partially translucent. The resulting color of the tooth depends on the thickness of the enamel, which can vary from person to person, and the color of the underlying material. In the case of natural teeth, the dentin is located under the enamel. Since enamel is particularly transparent to near-infrared electromagnetic radiation, measurements in the near-infrared range can be used to determine the thickness of enamel.

For example, the iTero Element 5D intraoral scanner from Align Technology may provide for an integrated dental imaging system that may simultaneously scan and record 3D, intraoral color and NIRI, near infrared imaging technology, images and the internal structure of a tooth, i.e., enamel & dentin, in real-time. The near-infrared system operates in the range of the electromagnetic spectrum between 0.7 and 2.0 micrometers. The iTero Element 5D Imaging System uses light of wavelength of 850 nm that, when interacting with the hard tissue of a tooth, provides additional data about its structure. Enamel appears transparent through the NIRI system, due to which it can be used to determine the layer thickness or determine the 3D structure of the enamel. In addition, one can determine the 3D structure of the dentine.

In addition, scan data may be used, which is acquired using an X-ray of the patient's dentition. For example, the scan data may be acquired using a panoramic radiograph, i.e., a panoramic scanning dental X-ray of the upper and lower jaw. A panoramic radiograph provides a panoramic image showing a two-dimensional view of a half-circle from ear to ear.

In addition, scan data may be used, which is acquired using a CT scan, i.e., a computer tomography scan. A CT scan provides computer-processed combinations of multiple X-ray measurements taken from different angles to produce tomographic, i.e., cross-sectional images. For example, a focal plane tomography may be used with images of multiple planes being taken to generate a composite panoramic image.

For example, scan data acquired using cone-beam computed tomography (CBCT), also referred to as digital volume tomography (DVT), may be used. CBCT consisting of X-ray computed tomography with divergent X-rays forming a cone.

Additional scan data, e.g., acquired using nearfield-infrared imaging, X-ray imaging, and/or CT scanning, may have a beneficial effect of providing additional information about inner structures of the dentition, in particular about the inner structures of the damaged tooth.

Also other types of scan data acquired using further imaging methods of oral and maxillofacial radiology (OMFR), also referred to as dental and maxillofacial radiology (DMFR), may be used providing additional insight in the patient's craniofacial, dental and adjacent structures. The further imaging methods may, e.g., comprise multi-slice CT, magnetic resonance imaging (MRI), positron emission tomography (PET), ultrasound, cephalometric imaging, intra-oral imaging, e.g., bitewing, periapical and occlusal radiographs, as well as special methods, like sialography. The purpose of all the aforementioned imaging methods is to gain as much information as possible about the properties of the tooth, such as color, degree of hardness, degree of translucence etc.

As mentioned above, a 3D digital restoration model of the dental restoration for the damaged tooth is generated. The 3D digital restoration model defines for the dental restoration an optical target dental property for the damaged tooth. The 3D digital restoration model may be resembling a digital replica of a physical state of the dental restoration for the damaged tooth of the patient. The 3D digital restoration model of the dental restoration for the damaged tooth may be generated by replacing a digital dentition model of actual damaged tooth with a 3D digital models of a tooth from a tooth library.

E.g., the 3D digital restoration model may be generated using the 3D digital dentition model. For this purpose, the 3D digital dentition model may be digital modified until it resembles an intended state of the dentition, i.e., the digital damaged tooth may be digital modified until it resembles an intended state of the dentition, so that the restoration of damaged tooth is achieved. The modification may, e.g., comprise removing, replacing, resizing, reshaping, reorienting, repositioning one or more digital dentition models of actual teeth or tooth stumps with one or more 3D digital models of teeth from a tooth library. Furthermore, one or more of the library teeth may be used and adjusted. The adjustments may comprise, e.g., resizing, reshaping, reorienting and/or repositioning. The 3D digital restoration model may be generated by the computer system or it may be received from an external source. The external source may, e.g., be a server, like a cloud server, providing the 3D digital restoration model via a network. The external source may, e.g., be a removable storage providing the 3D digital restoration model via a direct communication connection.

The 3D digital restoration model defines for the dental restoration an optical target dental property for the damaged tooth. The optical target dental property may be selected from anyone of a color and a degree of translucency of the dentition of the patient, which can be acquired by an intraoral scan of at least one part of the dentition of the patient comprising a damaged tooth. Alternatively or additionally, optical target dental property may be selected from anyone of a color and a degree of translucency of the dentition of the patient, which can be acquired from 3D digital models of teeth from a tooth library.

The generating of the 3D digital restoration model may comprise replacing the damaged tooth of the 3D digital dentition model by a tooth from a tooth library. For modifying the 3D digital dentition model, the tooth which is modified or replaced may be segmented. The segmentation of individual tooth may be executed automatically or semi-automatically. This may be of advantage, because this may lead to a faster, accurate and efficient generation of the 3D digital restoration model, as the 3D digital models of teeth are already existing in the tooth library.

The generating of the 3D digital restoration model may comprise replacing a 3D digital model of actual damaged tooth comprised by the 3D digital dentition model with a 3D digital models of a tooth from a tooth library. Replacing a 3D digital model of actual damaged tooth by a 3D digital model of a tooth from a tooth library may have the beneficial effect that 3D digital model may be selected from the tooth library, which in view of its shape and/or color match the tooth of the dentition of the patient. Furthermore, the 3D digital model may already be optimized regarding its aesthetic appearance, like shape, symmetry and/or color and/or degree of translucency. The 3D digital model may only have to be adjusted regarding its position, orientation and/or size.

As mentioned above, a degree of dental attrition of the dentition of the patient using the 3D digital dentition model, e.g., obtained from scan data, is determined. The scan data may provide information regarding external and/or internal structures of the damaged tooth. The information may be indicative of a degree of attrition of the dentition of the patient.

The degree of dental attrition of the dentition of the patient may be based on one or more of the following: bruxism, tooth damage. A degree of dental attrition may for example comprise bruxism. Bruxism refers to excessive teeth grinding or jaw clenching. Bruxism is an oral parafunctional activity, i.e., unrelated to normal oral function like eating or talking. Symptoms commonly associated with bruxism may, e.g., comprise tooth wear and damage to dental restorations. Tooth damage may, e.g., comprise caries.

The scan data may, e.g., comprise NIRI data. The scan data may, e.g., comprise X-ray data. For example, the scan data may comprise tomography data acquired, e.g., using CBCT. Alternatively or additionally, various other types of imaging methods of oral and maxillofacial radiology may be used to acquire the scan data. The scan data may provide information about the structure of the tooth, in particular about internal structure of the tooth.

A target minimum degree of hardness of the dental restoration is determined using the determined degree of attrition. Based on the determined degree of attrition the minimum degree of hardness is determined, since a higher degree of attrition requires of a higher degree of hardness of the dental restoration and vice versa.

As mentioned above, the method comprises selecting for the dental restoration as defined by the 3D digital restoration model a dental restoration material from a database of dental restoration materials comprising a plurality of dental restoration materials. The database of dental restoration materials may be provided by the computer system or it may be received from an external source. The external source may, e.g., be a server, like a cloud server, providing the database of dental restoration materials via a network. The external source may, e.g., be a removable storage providing the database of dental restoration materials via a direct communication connection.

Each of the dental restoration materials is assigned with at least one optical and material parameter. The optical parameter of the selected dental restoration material matches the optical target dental property of the damaged tooth and the material parameter indicates a degree of hardness larger than or equal the target minimum degree of hardness.

As mentioned above, the dental restoration material is selected based on the matching of the optical parameter of the dental restoration material with the optical target dental property of the damaged tooth. The optical parameter of the dental restoration material may comprise any one of a material coloring value, which may indicate the color of dental restoration material, and a material translucency value, which may indicate the degree of translucency of the dental restoration material. The optical target dental property of the damaged tooth may comprise any one of a target dental coloring value, which may indicate the color of tooth, and a target dental translucency value, which may indicate the degree of translucency of the tooth. The dental restoration material is selected such that the difference between the material coloring value and the target dental coloring value is less than a predefined coloring threshold value. Alternatively or additionally, the dental restoration material is selected such that the difference between the material translucency value and the target dental translucency value is less than a predefined translucency threshold value.

The comparison of the optical parameter of the dental restoration material from the database of the dental restoration materials with the optical target dental property of the damaged tooth may be conducted by a processor of the computer system or by an external source, e.g., a server, like a cloud server, computing the difference and compare the difference value with respective predefined coloring threshold value and/or the respective predefined translucency threshold value, and provide the result via a network, such as via a direct communication connection.

Additionally, as mentioned above, the dental restoration material is selected such that the material parameter of the dental restoration material indicating a degree of hardness larger than or equal the target minimum degree of hardness. The comparison of the material parameter of the dental restoration material from the database of the dental restoration materials with the target minimum degree of hardness may be conducted by a processor of the computer system or by an external source, e.g., a server, like a cloud server, and provide the result via a network, such as via a direct communication connection.

For example, the 3D digital restoration model for the damaged tooth is divided into different areas corresponding to different areas of the damaged tooth. The determining a degree of dental attrition, the determining a target minimum degree of hardness and the selecting for the dental restoration are performed for each respective area of the damaged tooth. This may be of advantage, because this allows the restoration of different areas of the damaged tooth, by choosing an area specific dental restoration material, to be treated differently in a more efficient manner.

For example, the Incisal area a dental restoration material with higher degree of hardness than the other areas may be selected, whereas for the buccal area a dental restoration material may be chosen allowing a formation of slightly flexible structure compared to the other areas. Furthermore, for the buccal area the selection of the dental restoration material may be primarily based the optical parameter of the selected dental restoration material, such that the optical parameter of the selected dental restoration material matches the optical target dental property of the damaged tooth, in order to improve an aesthetic appearance of a smile of a patient.

For example, the 3D digital restoration model is generated from scan data of the dentition obtained from an external database or by 3D scanning of said at least one part of the dentition of a dental impression of the patient or the interior of a mouth of the patient, wherein the scanning is performed directly in the mouth.

This scan data may be acquired using an intraoral optical scan of the surface of the teeth of the patient. Furthermore, an impression of the dentition or a physical model, like a plaster cast, may be scanned using an optical scanner to acquire the scan data. The scan data may further comprise NIRI measurement data. The scan data may further comprise X-ray data. For example, the scan data may further comprise tomography data acquired, e.g., using CBCT. Alternatively or additionally, various other types of scan data may be acquired using imaging methods of oral and maxillofacial radiology.

For example, the optical target dental property is selected from anyone of a color and a degree of translucency.

The color of tooth and dental restorations may be determined by the effect of the underlying substances, which means that the visible color is the result of diffuse reflection from the inner dentin or opaque layer through the outer translucent layer. Translucency is the relative amount of light transmission or diffuse reflection from a substrate surface through a turbid medium. While the term translucency is used to describe the optical property, the corresponding word transmission is a physical term representing the ability of a medium to transmit light. The optical parameter of the dental restorative material may include a material coloring value, which may indicate the color of the dental restorative material, or a material translucency value, which may indicate the degree of translucency of the dental restorative material. The optical dental target property of the damaged tooth may include a dental target coloring value, which may indicate the color of the tooth, or a dental target translucency value, which may indicate the degree of translucency of the tooth. The dental restoration material is selected such that the difference between the material coloration value and the target tooth coloration value is less than a predefined coloring threshold value. Alternatively or additionally, the tooth restoration material is selected such that the difference between the material translucency value and the target tooth translucency value is less than a predefined translucency threshold value.

For example, the material parameter comprises a minimum allowed thickness of the dental restoration material, the selecting of the 3D digital restoration model defining for the dental restoration a minimum restoration thickness of the dental restoration. The selected dental restoration material has assigned a minimum allowed thickness smaller than or equal the minimum restoration thickness. This may be of advantage because based on the degree of hardness and the degree of translucency of the dental restoration material, a minimum restoration thickness can be determined. The minimum allowed thickness of the dental restoration material may be determined such to ensure a desired degree of translucency of the dental restoration as well as to ensure a sufficient mechanical durability of the respective dental restoration and/or stability.

For example, the generating of the 3D digital restoration model is based on measuring an approximal distance between the damaged tooth and the neighboring teeth of the damaged tooth, wherein based on the measured distance between the damaged tooth and the neighboring teeth of the damaged tooth the minimum restoration thickness of the dental restoration is determined. This may be of advantage because it may ensure that the minimum restoration thickness of the dental restoration is at most equal to the distance between the damaged tooth and the neighboring teeth of the damaged tooth, thereby ensuring that the dental restoration fits in well without displacing or causing pressure on the neighboring teeth of the damaged tooth.

The approximal distance between the damaged tooth and the neighboring teeth of the damaged can be measured by means of a scanning device, for example using a near-infrared scanner configured for near-infrared imaging of the dentition of the patient. The minimum restoration thickness of the dental restoration should not be greater than the distance between the damaged tooth and the neighboring teeth of the damaged tooth, in order to avoid a displacement of the teeth arrangement which would decrease an aesthetic appearance of teeth and thus an aesthetic appearance of a smile of a patient. Further, it may also lead to a damage of the dental restoration, e.g., due to erosion as result of friction between the dental restoration of the damaged tooth and the neighboring tooth.

As mentioned above, generating the 3D digital restoration model of the dental restoration for the damaged tooth may comprise replacing one or more digital dentition models of actual teeth or tooth stumps with one or more 3D digital models of teeth from a tooth library. This may be of advantage, because this may lead to a faster, accurate and efficient generation of the 3D digital restoration model, as the 3D digital models of teeth are already existing in the tooth library.

The 3D digital restoration model of the dental restoration for the damaged tooth may, e.g., be generated replacing teeth of the 3D digital dentition model of at least one part of a dentition of a patient requiring a restoration of a damaged tooth by one or more 3D digital models of teeth from a tooth library. The teeth of the 3D digital dentition model may be segmented at the position, where the desired library teeth are placed. The teeth may, e.g., be segmented automatically or semi-automatically. The segmentation of the teeth of the 3D digital dentition model may enable a digital tooth extraction. A digital 3D model of a library tooth may be placed and adjusted at the position of the extracted tooth. The library tooth may define a margin in which the preparation of the original tooth of the 3D digital dentition model may take place. The 3D digital dentition model may, e.g., be presented via a user interface in a transparent form, overlaid over the 3D digital restoration model being generated, e.g., by replacing original teeth with library teeth.

For example, generating the 3D digital restoration model of the dental restoration for the damaged tooth is based on analyzing at least two zones in a mouth of a patient. This may be of advantage because it allows the selection of a zone-specific dental restoration material to be made separately and independent of each other. The zones in the mouth of the patient correspond to an occlusal, a mesial, a distal, a buccal and a lingual position in the mouth respectively.

A zonal by zone analysis of the patient mouth allows the analysis of different zones of the patient mouth comprising corresponding damaged tooth in the respective zone. This may ensure a selection of a zone-specific dental restoration material independent of each other. For example, for selected dental restoration material for restoration of a damaged tooth in a zone corresponding to a distal position in the mouth of the patient, a dental restoration material with higher degree of hardness than the other positions may be selected, whereas for a zone corresponding to a buccal position, a dental restoration material may be chosen allowing a formation of slightly flexible structure compared to the other areas. In addition, the selection of the dental restoration material for the buccal position may be primarily based on the optical parameter of the selected dental restoration material, such that the optical parameter of the selected dental restoration material matches the optical target property of the damaged tooth to enhance the aesthetic appearance of a patient's smile.

For example, the selecting of the dental restoration material is based on a ranking order which is based on the position of the respective zone in the mouth of the patient, wherein the position of the respective zone in the mouth of the patient corresponding to a buccal position in the mouth of the patient is ranked higher than the other zones. This may be of advantage because to improve the aesthetic appearance of the patient's smile, the position of the zone in the patient's mouth corresponding to a buccal position in the patient's mouth is ranked higher than the other zones.

The list of dental restoration materials may, e.g., be ordered according to a ranking order, which may be based on the selection of a particular dental restoration material for a respective damaged tooth corresponding to a particular zone in the patient's mouth. In this situation, if one dental restoration material is to be selected, then the position of the respective zone in the mouth of the patient corresponding to a buccal position in the mouth of the patient is ranked higher than the other zones, as the buccal position corresponds to the front side of the teeth arrangement which are visible when a patient smiles. Hence, in order to improve the aesthetic appearance of the smile of the patient the position of the zone in the mouth of the patient corresponding to a buccal position in the mouth of the patient is ranked higher than the other zones. Furthermore, the ranking may consider the achievable effects in view of the degree of attrition of the dentition of the patient. Furthermore, other ranking criteria may be considered. Even individual preferences of the patient and/or the costs of the dental restoration material may be considered.

Further, the list of dental restoration materials ordered according to a ranking order may be provided as an output via a user interface of the computer. In response to the providing, the user may decide which of the treatment options are suitable and thus worth considering, and select a particular dental restoration material from the list for a particular zone or as a whole. In addition, the user may be enabled to alter the ranking order of the list of dental restoration materials selected from the list of selectable dental restoration materials options. In order to enable the user to select dental restoration materials in order to define the set of dental restoration materials, an output of selectable dental restoration materials options may be provided. Thus, the user may be enabled to check the output and select those dental restoration materials options which are suitable. For example, the input furthermore comprises a definition of the ranking order of the selected treatment options. By defining the ranking order, preferences of the users may be provided to the computer system.

For example, the selecting of the dental restoration material is performed specifically for at least some of the zones, wherein the optical parameter of the selected dental restoration material per zone matches the optical target dental property of the damaged tooth in this zone and the material parameter of the selected dental restoration material indicates a degree of hardness larger than or equal to the target minimum degree of hardness of the zone. This allows for a zonal by zone analysis of the patient mouth of different zones of the patient mouth comprising corresponding damaged tooth in the respective zone. This may ensure a selection of a zone-specific dental restoration material independent of each other. Thereby ensuring that a damaged tooth in a given zone in the patient mouth is treated differently than another damaged tooth in the patient mouth in a more efficient manner.

For example, the method comprises providing manufacturing information for the manufacture of the dental restoration by means of a CAD/CAM system or an additive printing process, wherein the manufacturing information is based on the 3D digital restoration model.

Additive printing process is the industrial production name for 3D printing, a computercontrolled process that produces three-dimensional objects by depositing materials, usually in layers. Using computer-aided design (CAD) or 3D object scanners, additive printing process enables the production of objects with precise geometric shapes. These are built up layer by layer, as in a 3D printing process. This is in contrast to traditional manufacturing, which often requires machining or other techniques to remove excess material.

A type of additive printing process may be binder jetting process which uses a 3d printing style head moving on x, y and z axes to deposit alternating layers of powdered material and a liquid binder as an adhesive. A type of additive printing process may be a directed energy deposition process which can be used with a wide variety of materials including ceramics, metals and polymers. A laser, electric arc or an electron beam gun mounted on an arm moves horizontally melting wire, filament feedstock or powder to build up material as a bed moves vertically. A type of additive printing process may be a material extrusion process which uses spooled polymers which are either extruded or drawn through a heated nozzle which is mounted on a movable arm. This builds melted material layer by layer as the nozzle moves horizontally and the bed moves vertically. The layers adhere through temperature control or chemical bonding agents. A type of additive printing process may be a powder bed fusion process which encompasses a variety of additive printing process techniques including direct metal laser melting, direct metal laser sintering, electron beam melting, selective laser sintering and selective heat sintering. Electron beams, lasers or thermal print heads are used to melt or partially melt fine layers of material after which excess powder is blasted away. A type of additive printing process may be a Vat Polymerization process which uses a vat of liquid resin photopolymer to create an object layer by layer. Mirrors are used to direct ultraviolet light which cures the successive layers of resin through photopolymerization. A type of additive printing process may be a wire arc additive manufacturing which uses arc welding power sources and manipulators to build 3D shapes through arc deposition. This process commonly uses wire as a material source and follows a predetermined path to create the desired shape. This method of additive manufacture is usually performed using robotic welding equipment.

Depending on the degree of attrition of the damaged tooth and the optical target dental property, as well as the position of the damaged tooth in the patients mouth a particular type dental restoration may be selected to be manufactured as a treatment option.

As an option using one or more veneers may be considered as a dental restoration for the damaged tooth or teeth. A veneer is a layer of material, e.g., a shell-like layer, which is placed on a tooth. A veneer may be used to partially and/or fully cover a facial surface of a tooth, in particular a labial surface of a tooth. A veneer may be a laminate veneer provided in form of a thin layer only covering the respective the surface, e.g., labial surface of the tooth. Veneers may improve an aesthetic appearance of teeth and thus an aesthetic appearance of a smile of a patient. Furthermore, a veneer may protect a tooth's surface, on which the veneer is placed, from damage.

A veneer may for example be made using a composite, also referred to as dental composite resins. Such dental composite resins are dental cements made of synthetic resins. A dental composite may, e.g., comprise a resin-based oligomer matrix, such as a bisphenol A-glycidyl methacrylate (BISGMA), urethane dimethacrylate (UDMA) or semi-crystalline polyceram (PEX), as well as an inorganic filler such as silicon dioxide (silica). Dental compositions may vary widely. For example, proprietary mixes of resins may be used for forming the matrix as well as engineered inorganic filler may be used, such as filler glasses and/or glass ceramics. The filler may be used to increase strength of the composite, increase wear resistance, decrease polymerization shrinkage, increase translucency, increase fluorescence, adjust color, and/or reduce exothermic reaction on polymerization. Glass fillers may, e.g., improve optical and mechanical properties of a dental composite. Ceramic fillers may, e.g., include zirconia-silica and zirconium oxide. A coupling agent such as silane may be used to enhance the bond between matrix and filler. An initiator, such as camphorquinone (CQ), phenylpropanedione (PPD) or lucirin (TPO), may be used to initiate the polymerization reaction of the resins, e.g., when blue light is applied. Furthermore, various additives may be used to control the rate of the polymerization reaction.

Resin fillers may, e.g., be made of glasses or ceramics. Glass fillers may, e.g., be made of crystalline silica, silicone dioxide, lithium/barium-aluminum glass, and/or borosilicate glass containing zinc/strontium/lithium. Ceramic fillers, e.g., made of zirconia-silica, or zirconium oxide. Fillers may, e.g., comprise macrofilled fillers with particle sizes, e.g., in the range of 5 - 10 µm, microfilled fillers with particle sizes of less than 5 µm, e.g., 0.4 µm, hybrid fillers with particles of various sizes and a filler load of, e.g., 75 - 85 % by weight, nanofilled fillers with particle sizes, e.g., in the range of 20 - 70 nm, or bulk fillers with nanohybrid particles, like non-agglomerated silica and zirconia particles, and a filler load of, e.g., 77 % by weight.

A composite veneer may be a direct veneer directly built-up in the mouth or an indirect veneer fabricated outside of the mouth and bonded in the mouth to a tooth using an adhesive, e.g., a resin cement.

A veneer may for example be made using a dental porcelain, also referred to as dental ceramic. The ceramic may, e.g., be ceramic of composition category 1, i.e., a glass-based system, like, e.g., feldspathic porcelain; ceramic of composition category 2, i.e., a glass-based system with filler, e.g., crystalline like leucite or lithium disilicate; ceramic of composition category 3, i.e., a crystalline-based system with glass fillers, e.g., alumina; ceramics of composition category 4, i.e., polycrystalline solids, like alumina and/or zirconia. The crystalline phase of crystalline ceramics may, e.g., comprise leucite, leucite and fluorapatite, lithium disilicate, alumina, spinel, alumina-zirconia (12Ce-TZP), zirconia (3Y-TZP), zirconia/fluorapatite-leucite glass-ceramic, or sanidine. A manufacturing technique of manufacturing crystalline ceramics may, e.g., comprise sintering, heat-pressing, sintering and heat-pressing, dry pressing and sintering, slip-casting and glass infiltration, soft machining, soft machining and glass-infiltration, soft machining and sintering, hard machining, or hard machining and heat treatment.

A porcelain veneer may be an indirect veneer fabricated outside of the mouth and bonded in the mouth to a tooth using an adhesive, e.g., a resin cement.

A veneer may be used to adjust the color of discolored tooth, to modify the shape of a malformed, malpositioned or worn tooth, to cover unaesthetic features of a damaged tooth caused, e.g., by enamel hypoplasia, enamel hypocalcification, fluorosis, enamel fractures and/or enamel loss by erosion. For example, veneers may be used to close free spaces between teeth, e.g., due to a small size of the teeth, which may not easily be closed by orthodontics. Furthermore, veneers may be used to lengthen teeth that have been shortened by wear, to fill triangles between teeth caused by gum recession, to provide a uniform color of the teeth, a uniform shape of the teeth, and/or uniform symmetry of the teeth, and/or make the teeth appear straight. Veneers may thus, e.g., be used to improve the aesthetic appearance of teeth with worn away edges, malformed teeth, malpositioned teeth and/or teeth that appear crooked. Applying a veneer, e.g., minimal to no tooth preparation may be required.

The veneers may be manufactured by means of CAD/CAM dentistry system or an additive printing process. Here the manufacturing information is based on the 3D digital restoration model. The manufacturing information may comprise the geometric data obtained from the 3D digital restoration model and material data, comprising the material properties, of the selected dental restoration material.

As an option using one or more crowns may be considered as a dental for the damaged tooth or teeth. A crown, also referred to as a dental cap, is a type of dental restoration which completely caps or encircles a tooth. A crown may, e.g., be bonded to the tooth by dental cement. Crowns may be made from many materials and, e.g., be fabricated using an indirect method, i.e., be fabricated outside of the mouth. A crown may be used to improve the strength, improve the aesthetic appearance of teeth and/or to halt deterioration of a tooth.

The crown may, e.g., be an inlay, onlay or single-unit crown. The crown may, e.g., be a full crown. The crown may, e.g., be a ceramic crown or a metal-ceramic crown. Ceramic crowns may be made using dental ceramics. Dental ceramics may, e.g., comprise silica, alumina and/or zirconia. Metal-ceramic crowns are hybrids of metal and ceramic crowns. The metal part may, e.g., be made of a base metal alloy, also referred to as a bonding alloy. Exemplary base-metal alloys may be silver-palladium, silver-palladium-copper, nickel-chromium, nickel-chromium-beryllium, cobalt-chromium, or titanium. To obtain an aesthetic finish a ceramic may be bonded to a metal framework provided by the base metal analogy. The bonding may, e.g., be implemented by a compression fit, e.g., via ceramic shrinkage on firing, by a micro-mechanical retention, e.g., via surface irregularities, or a chemical union, e.g., via oxide formation.

The crowns may be manufactured by means of CAD/CAM dentistry system or an additive printing process. Here the manufacturing information is based on the 3D digital restoration model. The manufacturing information may comprise the geometric data obtained from the 3D digital restoration model and material data, comprising the material properties, of the selected dental restoration material.

Using CAD/CAM methods a 3D model of the crown may be generated. Design information defining the 3D geometry of the crown may be used to control a manufacturing device, like a milling device. The milling device may use one or more milling tools, e.g., tungsten carbide or diamond burs, to mill the restoration, i.e., the crown, from a blank. The blank may be made of a material, e.g., ceramic, with a pre-determined shade to match a target color. The crown may be sectioned from the remainder of the unmilled blank and tried in the patient's mouth. If the crown fits well, it may be cemented on the prepared tooth.

For example, the method further comprises providing a teeth preparation information, wherein the teeth preparation information comprises information describing the geometrical shape of a tooth stump to be prepared of the tooth that is to be repaired. The optical property of the combination of the tooth stump and the dental restoration which is placed on the tooth stump matches the optical target dental property of the damaged tooth.

In order to provide a sufficient retention and resistance to hold the dental restoration, e.g., the crown in place, the respective tooth or tooth stump intended to receive the crown may have to be prepared. In this context, retention refers to a resistance of movement of a restoration, i.e., crown, along a path of insertion or along a long axis of the tooth being prepared. Resistance refers to a resistance of movement against forces applied apically or in an oblique direction preventing movement under occlusal forces. Retention may be determined by a relationship between opposing surfaces of the preparation, e.g., a relationship of buccal and lingual walls of the preparation.

For full coverage crown, the form of a tooth or tooth stump may be prepared to slightly taper, i.e., converge in an occlusal direction. This may, e.g., allow to prevent undercuts, compensate for crown fabrication inaccuracies as well as for excess cement to escape in order to optimize a seating of the crown on the preparation. For example, axial walls may, e.g., be prepared with a 2 - 3° taper on each wall and an overall 4 - 6° taper. In order to ensure a sufficient retention, taper be kept to a minimum whilst eliminating undercuts.

The occluso-gingival length or height of a preparation may affect resistance as well as retention. In order to provide a sufficiently large surface, a tall preparation may be desirable. To ensure sufficient retention for a crown, a length of the preparation may be greater than a height formed by an arc of a cast pivoting around a point on a margin on an opposite side of the restoration. The arc may be affected by a diameter of the tooth prepared. Therefore, the smaller the diameter, the shorter the length of the crown may have to be, in order to provide a sufficient retention. Retention may, e.g., be improved by placing grooves in the axial walls.

Retention may further be improved by geometrically limiting a number of paths along which the crown is removable. Removal of healthy tooth tissue, when preparing a tooth or tooth stump, may be minimized as far as possible.

The crown may be required to comprise enough material to withstand normal masticatory function. On the other hand, the crown has to be contained within a space created by the tooth preparation. Depending on the material used to manufacture the crown, sufficient occlusal and axial reductions of a tooth is required to house the crown.

Metal-ceramic crowns and full ceramic crowns may, e.g., require an occlusal clearance, e.g., a clearance of 2.0 mm. The occlusal clearance may follow the natural outline of the tooth in order to ensure a sufficient thickness of the crown over the complete occlusal section. For example, it may be required that the chewing portion of the crown is 1.5 mm thick or greater.

An axial reduction of the prepared tooth may be required to allow for a sufficient lateral thickness of the crown in dependence of the material chosen. Depending on the type of crown to be fitted, there may be a minimum preparation thickness. A metal-ceramic or full ceramic crown may, e.g., require at least 1.2 mm.

Preparing a tooth for a crown may therefore require a more extensive removal of tooth tissue compared to a preparation for using a veneer.

For a crown, it may be required that a prepared tooth stump, on which the crown is to placed, does not become too thin and/or pointed. The respective tooth stump may, e.g., be represented by the adapted library tooth. For example, a ball with a diameter resembling a required minimum diameter of the tooth stump may be placed within a clearance of the 3D digital model of the crown. The clearance is intended for receiving the respective tooth stump. It may be checked that the ball does not or only within pre-defined limits penetrate an inner surface of the 3D digital model of the crown defining the clearance.

Furthermore, in order to check a minimum thickness of a veneer or a crown, a distance between an outer surface of the veneer or crown opposing a bonding surface of the veneer or crown may be measured. In case the minimum thickness requirement is violated, the veneer or crown may be regenerated with a larger thickness. In this case, it may, e.g., have to be checked again, whether a prepared tooth stump still has a sufficiently large diameter.

Guiding instructions may be providing, identifying where tooth tissue has to be removed to which extend in order to prepare the current state of the dentition for applying the proposed dental restoration.

Further, one or more damaged teeth may have to be prepared in order to provide a suitable support surface configured for supporting a veneer. The preparing of the respective teeth may comprise generating preparation by removing tooth substance in order to shape the required support surface. For this purpose, a surface of a tooth, e.g., a lingual surface, may be shaped to provide a sufficient support surface for a veneer.

Furthermore, the optical property of the combination of the tooth stump and the dental restoration which is placed on the tooth stump matches the optical target dental property of the damaged tooth. Especially in the case, where the dental restoration is manufactured using a dental restoration material with a certain degree of translucency, the optical property of the combination of the tooth stump and the dental restoration which is placed on the tooth stump matches the optical target dental property of the damaged tooth. This would allow the restoration of the damaged tooth to achieve the required optical target dental property of the damaged tooth.

For example, the providing of the manufacturing information comprises generating the manufacturing information based on the teeth preparation information.

In another aspect, the invention relates to a computer system for selecting dental restoration materials for manufacturing a dental restoration. The computer system comprising a processor and a memory storing program instructions executable by the processor. Execution of the program instructions by the processor causes the computer system to receive a 3D digital dentition model of at least one part of a dentition of a patient requiring a restoration of a damaged tooth. Furthermore, a 3D digital restoration model of the dental restoration for the damaged tooth is generated. The 3D digital restoration model defines for the dental restoration an optical target dental property for the damaged tooth. A degree of dental attrition of the dentition of the patient using the 3D digital dentition model is determined. A target minimum degree of hardness of the dental restoration is determined using the determined degree of attrition. The dental restoration as defined by the 3D digital restoration model a dental restoration material from a database of dental restoration materials comprising a plurality of dental restoration materials is selected. Each of the dental restoration materials is assigned with at least one optical and material parameter. The optical parameter of the selected dental restoration material matches the optical target dental property of the damaged tooth and the material parameter indicates a degree of hardness larger than or equal the target minimum degree of hardness.

In another aspect, the invention relates to a computer program product for selecting dental restoration materials for manufacturing a dental restoration. The computer program product comprises a computer readable storage medium having program instructions embodied therewith. The program instructions being executable by a processor of a computer system to cause the computer system to receive a 3D digital dentition model of at least one part of a dentition of a patient requiring a restoration of a damaged tooth. Furthermore, a 3D digital restoration model of the dental restoration for the damaged tooth is generated. The 3D digital restoration model defines for the dental restoration an optical target dental property for the damaged tooth. A degree of dental attrition of the dentition of the patient using the 3D digital dentition model is determined. A target minimum degree of hardness of the dental restoration is determined using the determined degree of attrition. The dental restoration as defined by the 3D digital restoration model a dental restoration material from a database of dental restoration materials comprising a plurality of dental restoration materials is selected. Each of the dental restoration materials is assigned with at least one optical and material parameter. The optical parameter of the selected dental restoration material matches the optical target dental property of the damaged tooth and the material parameter indicates a degree of hardness larger than or equal the target minimum degree of hardness.

The program instructions provided by the computer program product may be configurated to be executed by any of the aforementioned examples of a computer system for selecting dental restoration materials for manufacturing a dental restoration.

For example, the program instructions may implement a method providing an automatic treatment selection automatically selecting a treatment option for a dental treatment, e.g., reconstruction.

The above-described examples and embodiments may be combined freely as long as the combinations are not mutually exclusive.

In the following, embodiments of the invention are described in greater detail in which
- Fig. 1: shows a flowchart illustrating an exemplary method for selecting dental restoration materials for manufacturing a dental restoration;
- Fig. 2: shows a flowchart illustrating an exemplary method for selecting dental restoration materials for manufacturing a dental restoration;
- Fig. 3: shows a flowchart illustrating an exemplary method for selecting dental restoration materials for manufacturing a dental restoration;
- Fig. 4: shows a flowchart illustrating an exemplary method for selecting dental restoration materials for manufacturing a dental restoration;
- Fig. 5: shows an exemplary computer system for selecting dental restoration materials for manufacturing a dental restoration;
- Fig. 6: shows an exemplary computer system for selecting dental restoration materials for manufacturing a dental restoration; and
- Fig. 7: shows an exemplary manufacturing system for manufacturing a dental restoration using a selected dental restoration material.

In the following similar features are denoted by the same reference numerals.

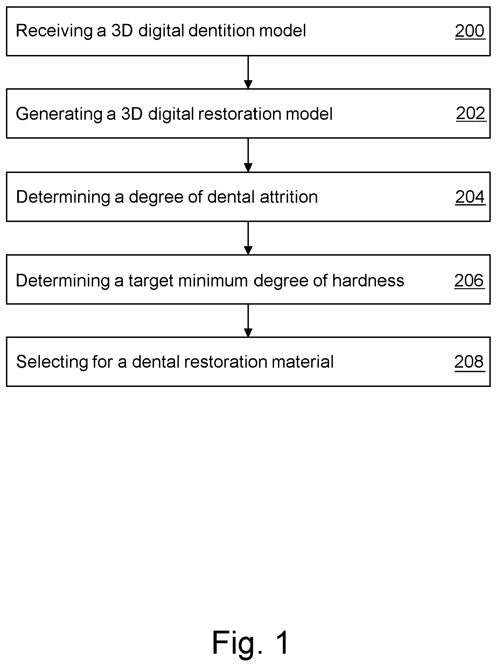

Fig. 1 shows an exemplary computer-implemented method for selecting dental restoration materials for manufacturing a dental restoration. In block 200, a 3D digital dentition model of at least one part of a dentition of a patient requiring a restoration of a damaged tooth is received. The 3D digital dentition model may be obtained from a scan data of at least a part of the dentition of the patient requiring a restoration of a damaged tooth. This scan data may be acquired using an intraoral optical scan of the surface of the teeth and the gingiva of the patient.

In block 202, a 3D digital restoration model of the dental restoration for the damaged tooth is generated. The 3D digital restoration model defines for the dental restoration an optical target dental property for the damaged tooth. The 3D digital restoration model may be resembling a digital replica of a physical state of the dental restoration for the damaged tooth of the patient. The 3D digital restoration model of the dental restoration for the damaged tooth may be generated by replacing a digital dentition model of actual damaged tooth with a 3D digital models of a tooth from a tooth library. The 3D digital restoration model may be generated using the 3D digital dentition model. The generating of the 3D digital restoration model may comprise replacing a 3D digital model of actual damaged tooth comprised by the 3D digital dentition model with a 3D digital model of a tooth from a tooth library.

In block 204, a degree of dental attrition of the dentition of the patient using the 3D digital dentition model, e.g., obtained from scan data, is determined. The scan data may provide information regarding external and/or internal structures of the damaged tooth. This information may in turn be indicative of a degree of attrition of patient's dentition. The degree of dental attrition of the dentition of the patient may be based on one or more of the following factors such as bruxism and tooth damage.

In block 206, a target minimum degree of hardness of the dental restoration is determined using the determined degree of attrition. Based on the determined degree of attrition the minimum degree of hardness is determined, since a higher degree of attrition requires of a higher degree of hardness of the dental restoration and vice versa.

In block 208, for the dental restoration as defined by the 3D digital restoration model a dental restoration material is selected from a database of dental restoration materials comprising a plurality of dental restoration materials. The database of dental restoration materials may be provided by the computer system or it may be received from an external source. The dental restoration material is selected based on the matching of the optical parameter of the dental restoration material with the optical target dental property of the damaged tooth and the material parameter indicates a degree of hardness larger than or equal the target minimum degree of hardness.

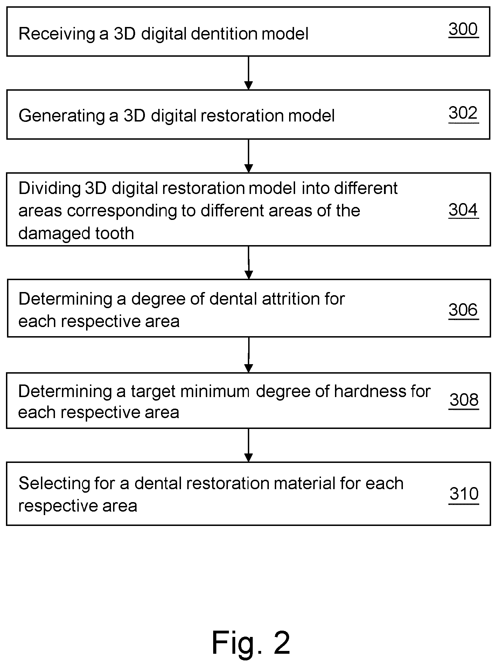

Fig. 2 shows a further exemplary computer-implemented method for selecting dental restoration materials for manufacturing a dental restoration. Blocks 300 and 302 are identical to blocks 200 and 202 of Fig. 1. In addition to blocks 300 and 302, Fig. 2 comprises in block 304 dividing of the 3D digital restoration model for the damaged tooth into different areas corresponding to different areas of the damaged tooth. The 3D digital restoration model of the dental restoration for the damaged tooth may be divided into different corresponding to different areas of the damaged tooth automatically or manually. For example, by defining a preparation boundary separating the unprepared area from the prepared area of a tooth, whereby an area-by-area restoration and the respective dental restoration material selection may be performed.

Furthermore, the following blocks 306 to 310 of Fig. 2 are in general similar to blocks 204 to 218 of Fig. 1. A difference being that in steps depicted by the blocks 306 to 310, the determining a degree of dental attrition, the determining a target minimum degree of hardness and the selecting for the dental restoration are performed for each respective area of the damaged tooth. For example, the Incisal area a dental restoration material with higher degree of hardness than the other areas may be selected, whereas for buccal area a dental restoration material may be chosen allowing a formation of slightly flexible structure compared to the other areas.

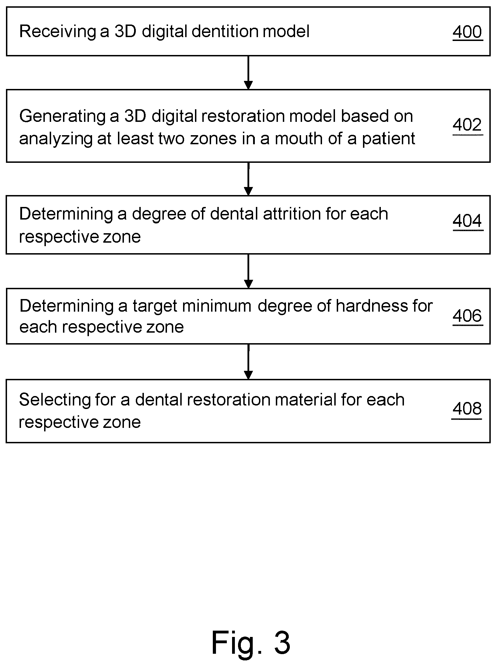

Fig. 3 shows a further exemplary computer-implemented method for selecting dental restoration materials for manufacturing a dental restoration. Block 400 is identical to block 200 of Fig. 1 and 300 of Fig. 2. Block 402 is in general similar to block 202 of Fig. 1 and block 302 of Fig. 2. A difference being that in the step depicted by block 402, the generating the 3D digital restoration model of the dental restoration for the damaged tooth is based on analyzing at least two zones in a mouth of a patient. This may ensure a selection of a zone-specific dental restoration material independent of each other. Thereby ensuring that a damaged tooth in a given zone in the patient mouth is treated differently than another damaged tooth in the patient mouth in a more efficient manner.

Furthermore, the following blocks 404 to 408 of Fig. 3 are in general similar to blocks 306 to 310 of Fig. 2. A difference being that in steps depicted by the blocks 306 to 310, the determining a degree of dental attrition, the determining a target minimum degree of hardness and the selecting for the dental restoration are performed for each respective zone in the mouth of the patient. Furthermore, the selecting of the dental restoration material may be performed specifically for at least some of the zones, wherein the optical parameter of the selected dental restoration material per zone matches the optical target dental property of the damaged tooth in this zone and the material parameter of the selected dental restoration material indicates a degree of hardness larger than or equal to the target minimum degree of hardness of the zone. For example, for selected dental restoration material for restoration of a damaged tooth in a zone corresponding to a distal position in the mouth of the patient, a dental restoration material with higher degree of hardness than the other positions may be selected, whereas for a zone corresponding to a buccal position, a dental restoration material may be chosen allowing a formation of slightly flexible structure compared to the other zones in the mouth of the patient.

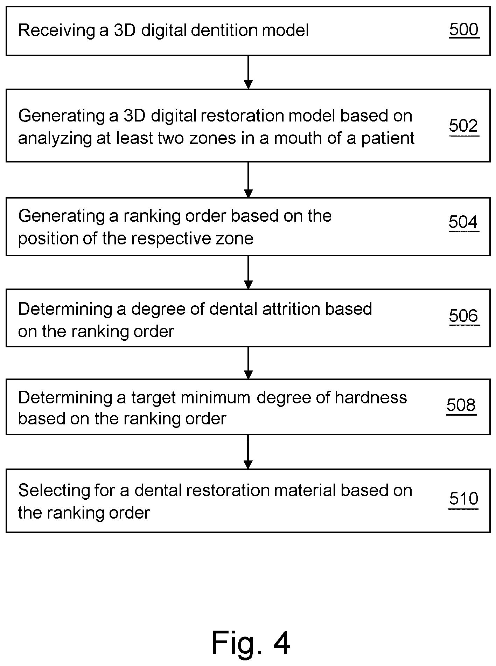

Fig. 4 shows a further exemplary computer-implemented method for selecting dental restoration materials for manufacturing a dental restoration. Blocks 500 and 302 are identical to blocks 400 and 402 of Fig. 3. In addition to blocks 500 and 502, Fig. 4 comprises in block 504 generating a ranking order which is based on the position of the respective zone in the mouth of the patient, wherein the position of the respective zone in the mouth of the patient corresponding to a buccal position in the mouth of the patient is ranked higher than the other zones.

Furthermore, the following blocks 506 to 510 of Fig. 4 are in general similar to blocks 404 to 408 of Fig. 1. A difference being that in steps depicted by the blocks 506 to 510, the determining a degree of dental attrition, the determining a target minimum degree of hardness and the selecting for the dental restoration are performed for one zone which is the highest in the ranking order generated in step 504. The list of dental restoration materials may, e.g., be ordered according to the ranking order, which may be based on the selection of a particular dental restoration material for a respective damaged tooth corresponding to a particular zone in the patient's mouth. In this situation, if one dental restoration material is to be selected, then the position of the respective zone in the mouth of the patient corresponding to a buccal position in the mouth of the patient is ranked higher than the other zones, as the buccal position corresponds to the front side of the teeth arrangement which are visible when a patient smiles. Hence, in order to improve the aesthetic appearance of the smile of the patient the position of the respective zone in the mouth of the patient corresponding to a buccal position in the mouth of the patient is ranked higher than the other zones.

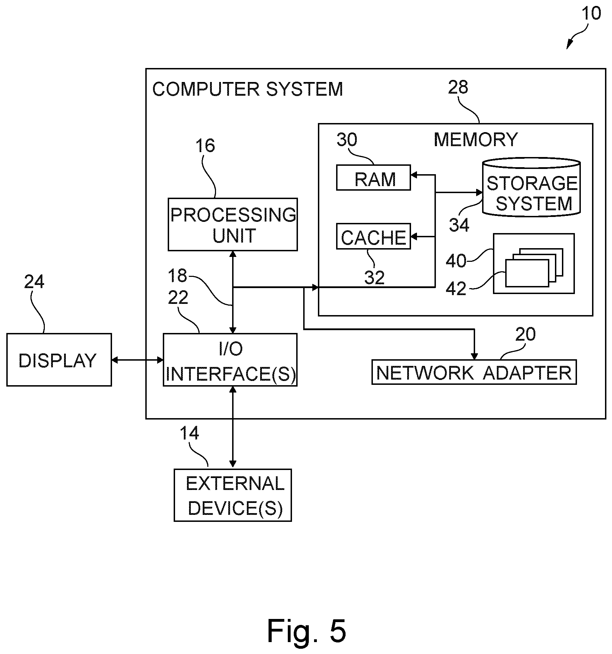

Fig. 5 shows a schematic diagram of an exemplary computer system 10 for selecting dental restoration materials for manufacturing a dental restoration. The computer system 10 may be operational with numerous other general-purpose or special-purpose computing system environments or configurations. Computer system 10 may be described in the general context of computer system executable instructions, such as program modules comprising executable program instructions, being executable by the computer system 10. Generally, program modules may include routines, programs, objects, components, logic, data structures, and so on that perform particular tasks or implement particular abstract data types. Computer system 10 may be practiced in distributed computing environments where tasks are performed by remote processing devices that are linked through a communications network. In a distributed computing environment, program modules may be located in both local and remote computer system storage media including memory storage devices.

In Fig. 5, computer system 10 is shown in the form of a general-purpose computing device. The components of computer system 10 may include, but are not limited to, one or more processors or processing units 16, a system memory 28, and a bus 18 that couples various system components including system memory 28 to processor 16. Bus 18 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus.

Computer system 10 may comprise a variety of computer system readable storage media. Such media may be any available storage media accessible by computer system 10, and include both volatile and non-volatile storage media, removable and non-removable storage media.

A system memory 28 may include computer system readable storage media in the form of volatile memory, such as random-access memory (RAM) 30 and/or cache memory 32. Computer system 10 may further include other removable/non-removable, volatile/non-volatile computer system storage media. For example, storage system 34 may be provided for reading from and writing to a non-removable, non-volatile magnetic media also referred to as a hard drive. For example, a magnetic disk drive for reading from and writing to a removable, non-volatile magnetic disk, e.g., a floppy disk, and an optical disk drive for reading from or writing to a removable, non-volatile optical disk such as a CD-ROM, DVD-ROM or other optical storage media may be provided. In such instances, each storage medium may be connected to bus 18 by one or more data media interfaces. Memory 28 may include at least one program product having a set of program modules, e.g., at least one program module, configured to select dental restoration materials for manufacturing a dental restoration.

Program 40 may have a set of one or more program modules 42 and by way of example be stored in memory 28. The program modules 42 may comprise an operating system, one or more application programs, other program modules, and/or program data. Each of the operating system, one or more application programs, other program modules, and program data or some combination thereof, may include an implementation of a networking environment. One or more of the program modules 42 may provide a selection of a dental restoration material for manufacturing a dental restoration.

Computer system 10 may further communicate with one or more external devices 14 such as a keyboard, a pointing device, like a mouse, and a display 24 enabling a user to interact with computer system 10. Such communication can occur via input/output (I/O) interfaces 22. Computer system 10 may further communicate with one or more networks such as a local area network (LAN), a general wide area network (WAN), and/or a public network, like the Internet, via network adapter 20. Network adapter 20 may communicate with other components of computer system 10 via bus 18. It should be understood that although not shown, other hardware and/or software components could be used in conjunction with computer system 10.

The computer system 10 shown in Fig. 5 may be configured for selecting dental restoration materials for manufacturing a dental restoration. The computer system 10 may be a standalone computer with no network connectivity that may receive data to be processed through a local interface. The data received by computer system 10 may for example comprise scan data of a patient's mouth from an intraoral scan or from a scan of a classical mold/impression, e.g., providing information about the surface structure of the patient's tissue on which the denture is to be placed. This data may be used to generate a 3D digital dentition model of at least one part of a dentition of a patient requiring a restoration of a damaged tooth. Alternatively, the data received may, e.g., comprise a 3D digital dentition model of at least one part of a dentition of a patient requiring a restoration of a damaged tooth. The computer system 10 may be used for selecting dental restoration materials for manufacturing a dental restoration. Such operation may, however, likewise be performed using a computer system that is connected to a network such as a communications network and/or a computing network.

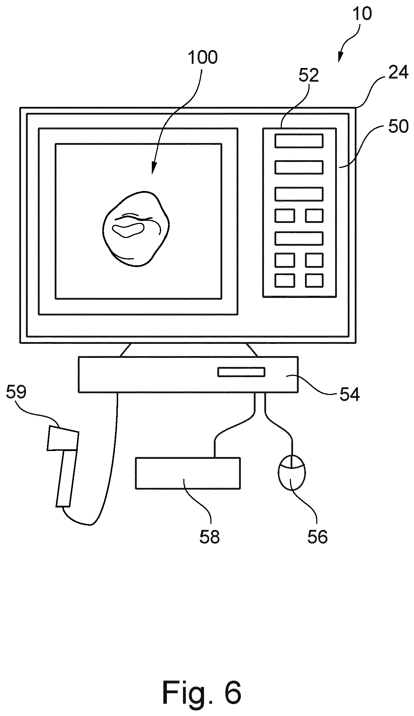

Fig. 6 shows an exemplary computer system 10 for selecting dental restoration materials for manufacturing a dental restoration. The computer system 10 may, e.g., be configured as shown in Fig. 5. The computer system 10 may comprise a hardware component 54 comprising one or more processors as well as a memory storing machine-executable program instructions. Execution of the program instructions by the one or more processors may cause the one or more processors to select dental restoration materials for manufacturing a dental restoration.

The computer system 10 may further comprise one or more input devices, like a keyboard 58 and a mouse 56, enabling a user to interact with the computer system 10. Furthermore, the computer system 10 may comprise one or more output devices, like a display 24 providing a graphical user interface 50 with control elements 52, e.g., GUI elements, enabling the user to control the selecting of a dental restoration material for the manufacturing of the dental restoration. For selecting the dental restoration material for manufacturing the dental restoration a 3D digital dentition model of at least one part of a dentition of a patient requiring a restoration of a damaged tooth may be received. A 3D digital restoration model 100 of the dental restoration for the damaged tooth is generated, which defines for the dental restoration an optical target dental property for the damaged tooth. A degree of dental attrition of the dentition of the patient using the 3D digital dentition model is determined. A target minimum degree of hardness of the dental restoration using the determined degree of attrition is determined. For the dental restoration as defined by the 3D digital restoration model a dental restoration material is selected from a database of dental restoration materials comprising a plurality of dental restoration materials. Each of the dental restoration materials is assigned with at least one optical and material parameter. The optical parameter of the selected dental restoration material matches the optical target dental property of the damaged tooth and the material parameter indicates a degree of hardness larger than or equal the target minimum degree of hardness.

The computer system 10 may further comprise a scanner 59, e.g., an optical scanner for scanning a patient's dentition. The scan data may be used for providing the 3D digital dentition model. The scanner 59 may, e.g., be configured to acquire scan data in the optical range using optical imaging and/or in the near-infrared range using near-infrared imaging.

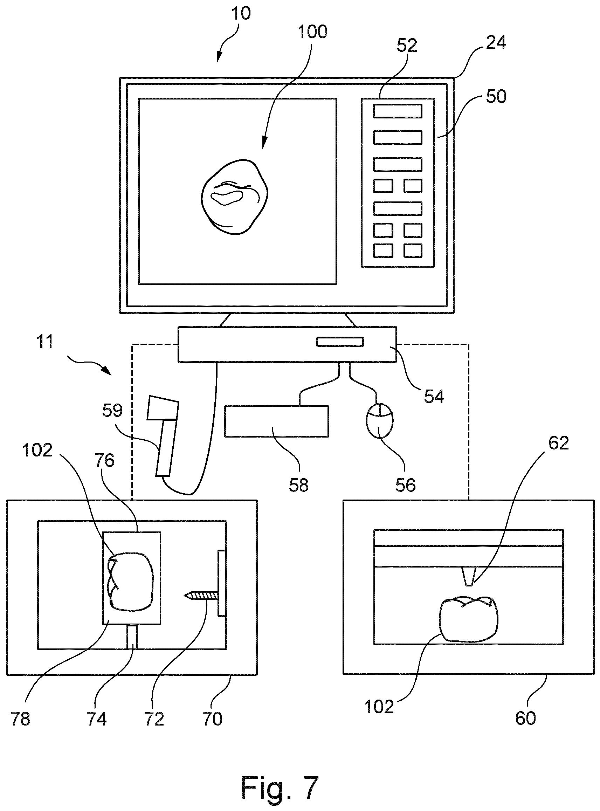

Fig. 7 shows an exemplary manufacturing system 11 for manufacturing a dental restoration 102 using a 3D digital restoration model 100 as template. The manufactured dental restoration 102 is a physical copy of the respective template. For manufacturing the dental restoration 102 a selected dental restoration material may be used.

The manufacturing system 11 may comprise the computer system 10 of Fig. 6. The computer system 10 may further be configured to generate the 3D digital restoration model 100 of the dental restoration 102, to select a dental restoration material for manufacturing the dental restoration 102 and to control one or more manufacturing devices 60, 70 to manufacture the dental restoration 102. For example, the manufacturing system 11 may comprise a manufacturing device in form of a machining device 70 controlled by the computer system 10. The machining device 70 may be configured to machining a blank 76 of the selected restoration material 78 using one or more machining tools 72. The blank 76 of selected restoration material 78, may be provided using a holding device 74 and cut into a desired shape and size of the element to be manufactured, e.g., a dental restoration 102. The machining tool 72 may, e.g., be a milling tool. A 3D digital model, e.g., the 3D digital restoration model 100, may provide a template for the element being manufactured using the machining device 70, e.g., the dental restoration 102.

For example, the manufacturing system 11 may comprise a manufacturing device in form of a 3D printing device 60. The 3D printing device 60 may be controlled by the computer system 10 and configured to print an element to be manufactured, e.g., a dental restoration 102. The 3D printing device 60 may comprise a printing element 62 configured to print the respective element, like the dental restoration 102, layer by layer. The printing element 62 may, e.g., comprise a nozzle configured for distributing printing material, i.e., restoration material. A 3D digital model, e.g., the 3D digital restoration model 100, may provide a template of the physical element manufactured using the 3D printing device 60, e.g., the dental restoration 102.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

A single processor or other unit may fulfill the functions of several items recited in the claims. A computer program may be stored/distributed on a suitable medium, such as an optical storage medium or a solid-state medium supplied together with or as part of other hardware, but may also be distributed in other forms, such as via the Internet or other wired or wireless telecommunication systems.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable signal medium or a computer readable storage medium. A "computer-readable storage medium" as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device. Examples of computer-readable storage media include, but are not limited to: a floppy disk, a magnetic hard disk drive, a solid-state hard disk, flash memory, a USB thumb drive, Random Access Memory (RAM), Read Only Memory (ROM), an optical disk, a magneto-optical disk, and the register file of the processor. Examples of optical disks include Compact Disks (CD) and Digital Versatile Disks (DVD), for example CD-ROM, CD-RW, CD-R, DVD-ROM, DVD-RW, or DVD-R disks. A further example of an optical disk may be a Blu-ray disk. The term computer readable-storage medium also refers to various types of recording media capable of being accessed by the computer device via a network or communication link. For example, a data may be retrieved over a modem, over the internet, or over a local area network. Computer executable code embodied on a computer readable medium may be transmitted using any appropriate medium, including but not limited to wireless, wireline, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

"Computer memory" or "memory" is an example of a computer-readable storage medium. Computer memory is any memory which is directly accessible to a processor. "Computer storage" or "storage" is a further example of a computer-readable storage medium. Computer storage is any non-volatile computer-readable storage medium. In some embodiments, computer storage may also be computer memory or vice versa.

A "processor" as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an objectoriented programming language such as Java, Smalltalk, C++, C# or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Generally, the program instructions can be executed on one processor or on several processors. In the case of multiple processors, they can be distributed over several different entities like clients, servers etc. Each processor could execute a portion of the instructions intended for that entity. Thus, when referring to a system or process involving multiple entities, the computer program or program instructions are understood to be adapted to be executed by a processor associated or related to the respective entity.

A "user interface" as used herein is an interface which allows a user or operator to interact with a computer or computer system. A 'user interface' may also be referred to as a 'human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, gear sticks, steering wheel, pedals, wired glove, dance pad, remote control, one or more switches, one or more buttons, and accelerometer are all examples of user interface components which enable the receiving of information or data from an operator.

A GUI element is a data object some of which's attributes specify the shape, layout and/or behavior of an area displayed on a graphical user interface, e.g., a screen. A GUI element can be a standard GUI element such as a button, a text box, a tab, an icon, a text field, a pane, a check-box item or item group or the like. A GUI element can likewise be an image, an alphanumeric character or any combination thereof. At least some of the properties of the displayed GUI elements depend on the data value aggregated on the group of data object said GUI element represents.

Aspects of the present invention are described with reference to flowchart illustrations and/or block diagrams of methods, apparatus (systems) and computer program products according to embodiments of the invention. It will be understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a processor of a general-purpose computer, special-purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer-implemented process such that the instructions which execute on the computer or other programmable apparatus provide processes for implementing the functions/acts specified in the flowchart and/or block diagram block or blocks.

### List of reference numerals

- 10: computer system
- 11: manufacturing system
- 14: external device
- 16: processing unit
- 18: bus
- 20: network adapter
- 22: I/O interface
- 24: display
- 28: memory
- 30: RAM
- 32: cache
- 34: storage system
- 40: program
- 42: program module
- 50: user interface
- 52: control elements
- 54: hardware device
- 56: keyboard
- 58: mouse
- 59: scanner
- 60: 3D printing device
- 62: printing element
- 70: machining device
- 72: machining tool
- 74: holding device
- 76: blank
- 78: restoration material
- 100: 3D digital restoration model
- 102: dental restoration

## Claims

1. A computer-implemented method for selecting dental restoration materials (78) for manufacturing a dental restoration (102), the method comprising:
receiving a 3D digital dentition model of at least one part of a dentition of a patient requiring a restoration of a damaged tooth,
generating a 3D digital restoration model (100) of the dental restoration (102) for the damaged tooth, the 3D digital restoration model (100) defining for the dental restoration (102) an optical target dental property for the damaged tooth,
determining a degree of dental attrition of the dentition of the patient using the 3D digital dentition model,
determining a target minimum degree of hardness of the dental restoration (102) using the determined degree of attrition, and
selecting for the dental restoration (102) as defined by the 3D digital restoration model (100) a dental restoration material (78) from a database of dental restoration materials (78) comprising a plurality of dental restoration materials (78), each of the dental restoration materials (78) being assigned with at least one optical and material parameter, wherein the optical parameter of the selected dental restoration material (78) matches the optical target dental property of the damaged tooth and the material parameter indicates a degree of hardness larger than or equal the target minimum degree of hardness.

2. The computer-implemented method of claim 1, wherein the 3D digital restoration model (100) for the damaged tooth is divided into different areas corresponding to different areas of the damaged tooth, the determining a degree of dental attrition, the determining a target minimum degree of hardness and the selecting for the dental restoration (102) being performed for each respective area of the damaged tooth.

3. The computer-implemented method of claim 1 or 2, wherein the 3D digital restoration model (100) is generated from scan data of the dentition obtained from an external database or by 3D scanning of said at least one part of the dentition of
- a dental impression of the patient or
- the interior of a mouth of the patient, wherein the scanning is performed directly in the mouth.

4. The computer-implemented method of claim 3, wherein the scan data comprises near-infrared range measurement data.

5. The computer-implemented method of any of the aforementioned claims, wherein the optical target dental property is selected from anyone of a color and a degree of translucency.

6. The computer-implemented method of any of the aforementioned claims, the material parameter comprising a minimum allowed thickness of the dental restoration material (78), the selecting of the 3D digital restoration model (100) defining for the dental restoration (102) a minimum restoration thickness of the dental restoration (102), wherein the selected dental restoration material (78) has assigned a minimum allowed thickness smaller than or equal the minimum restoration thickness.

7. The computer-implemented method of claim 6, wherein the generating of the 3D digital restoration model (100) is based on measuring an approximal distance between the damaged tooth and the neighboring teeth of the damaged tooth, wherein based on the measured distance between the damaged tooth and the neighboring teeth of the damaged tooth the minimum restoration thickness of the dental restoration (102) is determined.

8. The computer-implemented method of any of the aforementioned claims, wherein the degree of dental attrition of the dentition of the patient is based on one or more of the following: bruxism, tooth damage, and/or
wherein generating the 3D digital restoration model (100) of the dental restoration (102) for the damaged tooth comprises replacing one or more digital dentition models of actual teeth or tooth stumps with one or more 3D digital models of teeth from a tooth library.

9. The computer-implemented method of any of the aforementioned claims, wherein generating the 3D digital restoration model (100) of the dental restoration (102) for the damaged tooth is based on analyzing at least two zones in a mouth of a patient.

10. The computer-implemented method of claim 9, wherein the selecting of the dental restoration material (78) is based on a ranking order which is based on the position of the respective zone in the mouth of the patient, wherein the position of the respective zone in the mouth of the patient corresponding to a buccal position in the mouth of the patient is ranked higher than the other zones, and/or
the selecting of the dental restoration material (78) being performed specifically for at least some of the zones, wherein the optical parameter of the selected dental restoration material (78) per zone matches the optical target dental property of the damaged tooth in this zone and the material parameter of the selected dental restoration material (78) indicates a degree of hardness larger than or equal to the target minimum degree of hardness of the zone.

11. The computer-implemented method of any of the aforementioned claims, wherein the method comprises providing manufacturing information for the manufacture of the dental restoration (102) by means of a CAD/CAM system or an additive printing process, wherein the manufacturing information is based on the 3D digital restoration model.

12. The computer-implemented method of any of the aforementioned claims, further comprising providing a teeth preparation information, wherein the teeth preparation information comprises information describing the geometrical shape of a tooth stump to be prepared of the tooth that is to be repaired, wherein the optical property of the combination of the tooth stump and the dental restoration (102) which is placed on the tooth stump matches the optical target dental property of the damaged tooth.

13. The computer-implemented method of claim 11 and 12, wherein the providing of the manufacturing information comprises generating the manufacturing information based on the teeth preparation information.

14. A computer system (10) for selecting dental restoration materials (78) for manufacturing a dental restoration (102), the computer system (10) comprising a processor (16) and a memory (28) storing program instructions executable by the processor (16), wherein execution of the program instructions by the processor (16) causes the computer system (10) to:
receive a 3D digital dentition model of at least one part of a dentition of a patient requiring a restoration of a damaged tooth,
generate a 3D digital restoration model (100) of the dental restoration (102) for the damaged tooth, the 3D digital restoration model (100) defining for the dental restoration (102) an optical target dental property for the damaged tooth,
determine a degree of dental attrition of the dentition of the patient using the 3D digital dentition model,
determine a target minimum degree of hardness of the dental restoration (102) using the determined degree of attrition, and
select for the dental restoration (102) as defined by the 3D digital restoration model (100) a dental restoration material (78) from a database of dental restoration materials (78) comprising a plurality of dental restoration materials (78), each of the dental restoration materials (78) being assigned with at least one optical and material parameter, wherein the optical parameter of the selected dental restoration material (78) matches the optical target dental property of the damaged tooth and the material parameter indicates a degree of hardness larger than or equal the target minimum degree of hardness.

15. A computer program product for selecting dental restoration materials (78) for manufacturing a dental restoration (102), the computer program product comprising a computer readable storage medium having program instructions embodied therewith, the program instructions being executable by a processor (16) of a computer system (10) to cause the computer system (10) to:
receive a 3D digital dentition model of at least one part of a dentition of a patient requiring a restoration of a damaged tooth,
generate a 3D digital restoration model (100) of the dental restoration (102) for the damaged tooth, the 3D digital restoration model (100) defining for the dental restoration (102) an optical target dental property for the damaged tooth,
determine a degree of dental attrition of the dentition of the patient using the 3D digital dentition model,
determine a target minimum degree of hardness of the dental restoration (102) using the determined degree of attrition, and
select for the dental restoration (102) as defined by the 3D digital restoration model (100) a dental restoration material (78) from a database of dental restoration materials (78) comprising a plurality of dental restoration materials (78), each of the dental restoration materials (78) being assigned with at least one optical and material parameter, wherein the optical parameter of the selected dental restoration material (78) matches the optical target dental property of the damaged tooth and the material parameter indicates a degree of hardness larger than or equal the target minimum degree of hardness.

## Patentansprüche

1. Computerimplementiertes Verfahren zum Auswählen von Dentalrestaurationsmaterialien (78) zum Herstellen einer Dentalrestauration (102), wobei das Verfahren umfasst:
Empfangen eines digitalen 3D-Gebissmodells wenigstens eines Teils eines Gebisses eines Patienten, bei dem eine Restauration eines beschädigten Zahns erforderlich ist,
Erzeugen eines digitalen 3D-Restaurationsmodells (100) der Dentalrestauration (102) für den beschädigten Zahn, wobei das digitale 3D-Restaurationsmodell (100) für die Dentalrestauration (102) eine optische Ziel-Zahneigenschaft für den beschädigten Zahn definiert,
Bestimmen eines Grads dentaler Abnutzung des Gebisses des Patienten unter Verwendung des digitalen 3D-Gebissmodells,
Bestimmen eines Ziel-Mindesthärtegrads der Dentalrestauration (102) unter Verwendung des bestimmten Abnutzungsgrads, und
Auswählen, für die Dentalrestauration (102), wie sie durch das digitale 3D-Restaurationsmodell (100) definiert ist, eines Dentalrestaurationsmaterials (78) aus einer Datenbank von Dentalrestaurationsmaterialien (78), die eine Mehrzahl von Dentalrestaurationsmaterialien (78) umfasst, wobei jedem der Dentalrestaurationsmaterialien (78) wenigstens ein optischer Parameter und ein Materialparameter zugeordnet ist, wobei der optische Parameter des ausgewählten Dentalrestaurationsmaterials (78) mit der optischen Ziel-Zahneigenschaft des beschädigten Zahns übereinstimmt und der Materialparameter einen Härtegrad angibt, der größer als oder gleich dem Ziel-Mindesthärtegrad ist.

2. Computerimplementiertes Verfahren nach Anspruch 1, wobei das digitale 3D-Restaurationsmodell (100) für den beschädigten Zahn in unterschiedliche Bereiche unterteilt ist, die unterschiedlichen Bereichen des beschädigten Zahns entsprechen, wobei das Bestimmen eines Grads dentaler Abnutzung, das Bestimmen eines Ziel-Mindesthärtegrads und das Auswählen für die Dentalrestauration (102) für jeden jeweiligen Bereich des beschädigten Zahns durchgeführt werden.

3. Computerimplementiertes Verfahren nach Anspruch 1 oder 2, wobei das digitale 3D-Restaurationsmodell (100) aus Scandaten des Gebisses erzeugt wird, die aus einer externen Datenbank oder durch 3D-Scannen des wenigstens einen Teils des Gebisses
- eines Zahnabdrucks des Patienten oder
- des Inneren eines Munds des Patienten, wobei das Scannen direkt im Mund durchgeführt wird.

4. Computerimplementiertes Verfahren nach Anspruch 3, wobei die Scandaten Messdaten im Nahinfrarotbereich umfassen.

5. Computerimplementiertes Verfahren nach einem der vorstehenden Ansprüche, wobei die optische Ziel-Zahneigenschaft aus einer Farbe und/oder einem Transluzenzgrad ausgewählt ist.

6. Computerimplementiertes Verfahren nach einem der vorstehenden Ansprüche, wobei der Materialparameter eine zulässige Mindestdicke des Dentalrestaurationsmaterials (78) umfasst, wobei das Auswählen des digitalen 3D-Restaurationsmodells (100) für die Dentalrestauration (102) eine Mindestrestaurationsdicke der Dentalrestauration (102) definiert, wobei dem ausgewählten Dentalrestaurationsmaterial (78) eine zulässige Mindestdicke zugeordnet ist, die kleiner als oder gleich der Mindestrestaurationsdicke ist.

7. Computerimplementiertes Verfahren nach Anspruch 6, wobei das Erzeugen des digitalen 3D-Restaurationsmodells (100) auf dem Messen eines approximalen Abstands zwischen dem beschädigten Zahn und den Nachbarzähnen des beschädigten Zahns basiert, wobei basierend auf dem gemessenen Abstand zwischen dem beschädigten Zahn und den Nachbarzähnen des beschädigten Zahns die Mindestrestaurationsdicke der Dentalrestauration (102) bestimmt wird.

8. Computerimplementiertes Verfahren nach einem der vorstehenden Ansprüche, wobei der Grad dentaler Abnutzung des Gebisses des Patienten auf einem oder mehreren der Folgenden basiert: Bruxismus, Zahnschädigung, und/oder
wobei das Erzeugen des digitalen 3D-Restaurationsmodells (100) der Dentalrestauration (102) für den beschädigten Zahn ein Ersetzen eines oder mehrerer digitaler Gebissmodelle von tatsächlichen Zähnen oder Zahnstümpfen durch ein oder mehrere digitale 3D-Modelle von Zähnen aus einer Zahnbibliothek umfasst.

9. Computerimplementiertes Verfahren nach einem der vorstehenden Ansprüche, wobei das Erzeugen des digitalen 3D-Restaurationsmodells (100) der Dentalrestauration (102) für den beschädigten Zahn auf einem Analysieren von mindestens zwei Zonen in einem Mund eines Patienten basiert.

10. Computerimplementiertes Verfahren nach Anspruch 9, wobei das Auswählen des Dentalrestaurationsmaterials (78) auf einer Rangfolge basiert, die auf der Position der jeweiligen Zone im Mund des Patienten basiert, wobei die Position der jeweiligen Zone im Mund des Patienten, die einer bukkalen Position im Mund des Patienten entspricht, höher eingestuft wird als die anderen Zonen, und/oder
wobei das Auswählen des Dentalrestaurationsmaterials (78) spezifisch für zumindest einige der Zonen durchgeführt wird, wobei der optische Parameter des ausgewählten Dentalrestaurationsmaterials (78) je Zone mit der optischen Ziel-Zahneigenschaft des beschädigten Zahns in dieser Zone übereinstimmt und der Materialparameter des ausgewählten Dentalrestaurationsmaterials (78) einen Härtegrad angibt, der größer als oder gleich dem Ziel-Mindesthärtegrad der Zone ist.

11. Computerimplementiertes Verfahren nach einem der vorstehenden Ansprüche, wobei das Verfahren das Bereitstellen von Herstellungsinformationen zum Herstellen der Dentalrestauration (102) mittels eines CAD/CAM-Systems oder eines additiven Druckverfahrens umfasst, wobei die Herstellungsinformationen auf dem digitalen 3D-Restaurationsmodell basieren.

12. Computerimplementiertes Verfahren nach einem der vorstehenden Ansprüche, ferner umfassend ein Bereitstellen einer Zahnpräparationsinformation, wobei die Zahnpräparationsinformation Informationen umfasst, die die geometrische Form eines zu präparierenden Zahnstumpfs des Zahns beschreiben, der zu reparieren ist, wobei die optische Eigenschaft der Kombination des Zahnstumpfs und der Dentalrestauration (102), die auf dem Zahnstumpf platziert ist, mit der optischen Ziel-Zahneigenschaft des beschädigten Zahns übereinstimmt.

13. Computerimplementiertes Verfahren nach den Ansprüchen 11 und 12, wobei das Bereitstellen der Herstellungsinformationen das Erzeugen der Herstellungsinformationen basierend auf der Zahnpräparationsinformation umfasst.

14. Computersystem (10) zum Auswählen von Dentalrestaurationsmaterialien (78) zum Herstellen einer Dentalrestauration (102), wobei das Computersystem (10) einen Prozessor (16) und einen Speicher (28) umfasst, in dem Programmanweisungen gespeichert sind, die durch den Prozessor (16) ausführbar sind, wobei ein Ausführen der Programmanweisungen durch den Prozessor (16) das Computersystem (10) dazu veranlasst:
ein digitales 3D-Gebissmodell wenigstens eines Teils eines Gebisses eines Patienten zu empfangen, bei dem eine Restauration eines beschädigten Zahns erforderlich ist,
ein digitales 3D-Restaurationsmodell (100) der Dentalrestauration (102) für den beschädigten Zahn zu erzeugen, wobei das digitale 3D-Restaurationsmodell (100) für die Dentalrestauration (102) eine optische Ziel-Zahneigenschaft für den beschädigten Zahn definiert,
einen Grad dentaler Abnutzung des Gebisses des Patienten unter Verwendung des digitalen 3D-Gebissmodells zu bestimmen,
einen Ziel-Mindesthärtegrad der Dentalrestauration (102) unter Verwendung des bestimmten Abnutzungsgrads zu bestimmen, und
für die Dentalrestauration (102), wie sie durch das digitale 3D-Restaurationsmodell (100) definiert ist, ein Dentalrestaurationsmaterial (78) aus einer Datenbank von Dentalrestaurationsmaterialien (78) auszuwählen, die eine Mehrzahl von Dentalrestaurationsmaterialien (78) umfasst, wobei jedem der Dentalrestaurationsmaterialien (78) wenigstens ein optischer Parameter und ein Materialparameter zugeordnet ist, wobei der optische Parameter des ausgewählten Dentalrestaurationsmaterials (78) mit der optischen Ziel-Zahneigenschaft des beschädigten Zahns übereinstimmt und der Materialparameter einen Härtegrad angibt, der größer als oder gleich dem Ziel-Mindesthärtegrad ist.

15. Computerprogrammprodukt zum Auswählen von Dentalrestaurationsmaterialien (78) zum Herstellen einer Dentalrestauration (102), wobei das Computerprogrammprodukt ein computerlesbares Speichermedium umfasst, auf dem Programmanweisungen verkörpert sind, wobei die Programmanweisungen durch einen Prozessor (16) eines Computersystems (10) ausführbar sind, um das Computersystem (10) dazu zu veranlassen:
ein digitales 3D-Gebissmodell wenigstens eines Teils eines Gebisses eines Patienten zu empfangen, bei dem eine Restauration eines beschädigten Zahns erforderlich ist,
ein digitales 3D-Restaurationsmodell (100) der Dentalrestauration (102) für den beschädigten Zahn zu erzeugen, wobei das digitale 3D-Restaurationsmodell (100) für die Dentalrestauration (102) eine optische Ziel-Zahneigenschaft für den beschädigten Zahn definiert,
einen Grad dentaler Abnutzung des Gebisses des Patienten unter Verwendung des digitalen 3D-Gebissmodells zu bestimmen,
einen Ziel-Mindesthärtegrad der Dentalrestauration (102) unter Verwendung des bestimmten Abnutzungsgrads zu bestimmen, und
für die Dentalrestauration (102), wie sie durch das digitale 3D-Restaurationsmodell (100) definiert ist, ein Dentalrestaurationsmaterial (78) aus einer Datenbank von Dentalrestaurationsmaterialien (78) auszuwählen, die eine Mehrzahl von Dentalrestaurationsmaterialien (78) umfasst, wobei jedem der Dentalrestaurationsmaterialien (78) wenigstens ein optischer Parameter und ein Materialparameter zugeordnet ist, wobei der optische Parameter des ausgewählten Dentalrestaurationsmaterials (78) mit der optischen Ziel-Zahneigenschaft des beschädigten Zahns übereinstimmt und der Materialparameter einen Härtegrad angibt, der größer als oder gleich dem Ziel-Mindesthärtegrad ist.

## Revendications

1. Procédé mis en œuvre par ordinateur pour sélectionner des matériaux de restauration dentaire (78) pour fabriquer une restauration dentaire (102), le procédé comprenant:
la réception d'un modèle de dentition 3D numérique d'au moins une partie d'une dentition d'un patient nécessitant une restauration d'une dent endommagée,
la génération d'un modèle de restauration 3D numérique (100) de la restauration dentaire (102) pour la dent endommagée, le modèle de restauration 3D numérique (100) pour la restauration dentaire (102) définissant une propriété optique dentaire cible pour la dent endommagée,
la détermination d'un degré d'usure dentaire de la dentition du patient en utilisant le modèle de dentition 3D numérique,
la détermination d'un degré de dureté minimal cible de la restauration dentaire (102) en utilisant le degré d'usure déterminé, et
la sélection, pour la restauration dentaire (102) telle que définie par le modèle de restauration 3D numérique (100), d'un matériau de restauration dentaire (78) à partir d'une base de données de matériaux de restauration dentaire (78) comprenant une pluralité de matériaux de restauration dentaire (78), chacun des matériaux de restauration dentaire (78) étant associé à au moins un paramètre optique et un paramètre de matériau, le paramètre optique du matériau de restauration dentaire sélectionné (78) correspondant à la propriété optique dentaire cible de la dent endommagée et le paramètre de matériau indiquant un degré de dureté supérieur ou égal au degré de dureté minimal cible.

2. Procédé mis en œuvre par ordinateur selon la revendication 1, dans lequel le modèle de restauration 3D numérique (100) pour la dent endommagée est divisé en différentes régions correspondant à différentes régions de la dent endommagée, dans lequel la détermination d'un degré d'usure dentaire, la détermination d'un degré de dureté minimal cible et la sélection pour la restauration dentaire (102) sont effectuées pour chaque région respective de la dent endommagée.

3. Procédé mis en œuvre par ordinateur selon la revendication 1 ou 2, dans lequel le modèle de restauration 3D numérique (100) est généré à partir de données de balayage de la dentition obtenues à partir d'une base de données externe ou par balayage 3D d'au moins une partie de la dentition
- d'une empreinte dentaire du patient ou
- de l'intérieur d'une bouche du patient, dans lequel le balayage est effectué directement dans la bouche.

4. Procédé mis en œuvre par ordinateur selon la revendication 3, dans lequel les données de balayage comprennent des données de mesure dans le proche infrarouge.

5. Procédé mis en œuvre par ordinateur selon l'une quelconque des revendications précédentes, dans lequel la propriété optique dentaire cible est sélectionnée parmi une couleur et/ou un degré de translucidité.

6. Procédé mis en œuvre par ordinateur selon l'une quelconque des revendications précédentes, dans lequel le paramètre de matériau comprend une épaisseur minimale admissible du matériau de restauration dentaire (78), dans lequel la sélection du modèle de restauration 3D numérique (100) pour la restauration dentaire (102) définit une épaisseur minimale de restauration de la restauration dentaire (102), dans lequel le matériau de restauration dentaire sélectionné (78) est associé à une épaisseur minimale admissible qui est inférieure ou égale à l'épaisseur minimale de restauration.

7. Procédé mis en œuvre par ordinateur selon la revendication 6, dans lequel la génération du modèle de restauration 3D numérique (100) est basée sur la mesure d'une distance interproximale entre la dent endommagée et les dents adjacentes à la dent endommagée, dans lequel l'épaisseur minimale de restauration de la restauration dentaire (102) est déterminée sur la base de la distance mesurée entre la dent endommagée et les dents adjacentes à la dent endommagée.

8. Procédé mis en œuvre par ordinateur selon l'une quelconque des revendications précédentes, dans lequel le degré d'usure dentaire de la dentition du patient est basé sur un ou plusieurs parmi: un bruxisme, une lésion dentaire, et/ou
dans lequel la génération du modèle de restauration 3D numérique (100) de la restauration dentaire (102) pour la dent endommagée comprend le remplacement d'un ou plusieurs modèles de dentition numériques de dents réelles ou de moignons dentaires par un ou plusieurs modèles 3D numériques de dents provenant d'une bibliothèque de dents.

9. Procédé mis en œuvre par ordinateur selon l'une quelconque des revendications précédentes, dans lequel la génération du modèle de restauration 3D numérique (100) de la restauration dentaire (102) pour la dent endommagée est basée sur l'analyse d'au moins deux zones dans une bouche d'un patient.

10. Procédé mis en œuvre par ordinateur selon la revendication 9, dans lequel la sélection du matériau de restauration dentaire (78) est basée sur un classement qui est basé sur la position de la zone respective dans la bouche du patient, dans lequel la position de la zone respective dans la bouche du patient qui correspond à une position buccale dans la bouche du patient est classée plus haut que les autres zones, et/ou
dans lequel la sélection du matériau de restauration dentaire (78) est effectuée spécifiquement pour au moins certaines des zones, dans lequel le paramètre optique du matériau de restauration dentaire sélectionné (78) par zone correspond à la propriété optique dentaire cible de la dent endommagée dans cette zone et le paramètre de matériau du matériau de restauration dentaire sélectionné (78) indique un degré de dureté supérieur ou égal au degré de dureté minimal cible de la zone.

11. Procédé mis en œuvre par ordinateur selon l'une quelconque des revendications précédentes, dans lequel le procédé comprend la fourniture d'informations de fabrication pour fabriquer la restauration dentaire (102) au moyen d'un système CAO/FAO ou d'un procédé d'impression additive, dans lequel les informations de fabrication sont basées sur le modèle de restauration 3D numérique.

12. Procédé mis en œuvre par ordinateur selon l'une quelconque des revendications précédentes, comprenant en outre la fourniture d'une information de préparation dentaire, dans lequel l'information de préparation dentaire comprend des informations décrivant la forme géométrique d'un moignon dentaire à préparer de la dent à réparer, dans lequel la propriété optique de la combinaison du moignon dentaire et de la restauration dentaire (102) placée sur le moignon dentaire correspond à la propriété optique dentaire cible de la dent endommagée.

13. Procédé mis en œuvre par ordinateur selon les revendications 11 et 12, dans lequel la fourniture des informations de fabrication comprend la génération des informations de fabrication sur la base de l'information de préparation dentaire.

14. Système informatique (10) pour sélectionner des matériaux de restauration dentaire (78) pour fabriquer une restauration dentaire (102), le système informatique (10) comprenant un processeur (16) et une mémoire (28) stockant des instructions de programme exécutables par le processeur (16), dans lequel l'exécution des instructions de programme par le processeur (16) amène le système informatique (10) à :
recevoir un modèle de dentition 3D numérique d'au moins une partie d'une dentition d'un patient nécessitant une restauration d'une dent endommagée,
générer un modèle de restauration 3D numérique (100) de la restauration dentaire (102) pour la dent endommagée, le modèle de restauration 3D numérique (100) pour la restauration dentaire (102) définissant une propriété optique dentaire cible pour la dent endommagée,
déterminer un degré d'usure dentaire de la dentition du patient en utilisant le modèle de dentition 3D numérique,
déterminer un degré de dureté minimal cible de la restauration dentaire (102) en utilisant le degré d'usure déterminé, et
sélectionner, pour la restauration dentaire (102) telle que définie par le modèle de restauration 3D numérique (100), un matériau de restauration dentaire (78) à partir d'une base de données de matériaux de restauration dentaire (78) comprenant une pluralité de matériaux de restauration dentaire (78), chacun des matériaux de restauration dentaire (78) étant associé à au moins un paramètre optique et un paramètre de matériau, le paramètre optique du matériau de restauration dentaire sélectionné (78) correspondant à la propriété optique dentaire cible de la dent endommagée et le paramètre de matériau indiquant un degré de dureté supérieur ou égal au degré de dureté minimal cible.

15. Produit de programme informatique pour sélectionner des matériaux de restauration dentaire (78) pour fabriquer une restauration dentaire (102), le produit de programme informatique comprenant un support de stockage lisible par ordinateur sur lequel sont incorporées des instructions de programme, les instructions de programme étant exécutables par un processeur (16) d'un système informatique (10) pour amener le système informatique (10) à :
recevoir un modèle de dentition 3D numérique d'au moins une partie d'une dentition d'un patient nécessitant une restauration d'une dent endommagée,
générer un modèle de restauration 3D numérique (100) de la restauration dentaire (102) pour la dent endommagée, le modèle de restauration 3D numérique (100) pour la restauration dentaire (102) définissant une propriété optique dentaire cible pour la dent endommagée,
déterminer un degré d'usure dentaire de la dentition du patient en utilisant le modèle de dentition 3D numérique,
déterminer un degré de dureté minimal cible de la restauration dentaire (102) en utilisant le degré d'usure déterminé, et
sélectionner, pour la restauration dentaire (102) telle que définie par le modèle de restauration 3D numérique (100), un matériau de restauration dentaire (78) à partir d'une base de données de matériaux de restauration dentaire (78) comprenant une pluralité de matériaux de restauration dentaire (78), chacun des matériaux de restauration dentaire (78) étant associé à au moins un paramètre optique et un paramètre de matériau, le paramètre optique du matériau de restauration dentaire sélectionné (78) correspondant à la propriété optique dentaire cible de la dent endommagée et le paramètre de matériau indiquant un degré de dureté supérieur ou égal au degré de dureté minimal cible.
